# EUROPÄISCHE PATENTSCHRIFT

(11) **EP 1 406 980 B1**
(45) Veröffentlichungstag und Bekanntmachung des Hinweises auf die Patenterteilung: **27.05.2009**
(21) Anmeldenummer: 02743223.6
(22) Anmeldetag: 18.06.2002
(51) Int. Cl.: C09D 201/02, C08G 18/62

(54) **CARBAMAT- UND/ODER ALLOPHANATGRUPPEN ENTHALTENDE, THERMISCH UND MIT AKTINISCHER STRAHLUNG HÄRTBARE GEMISCHE**
MIXTURES WHICH CONTAIN CARBAMATE GROUPS AND/OR ALLOPHANATE GROUPS AND CAN BE CURED THERMALLY AND BY USING ACTINIC RADIATION
MELANGES DURCISSABLES THERMIQUEMENT ET PAR RAYONNEMENT ACTINIQUE, CONTENANT DES GROUPES CARBAMATE ET/OU ALLOPHANATE

(30) Priorität: 21.06.2001 DE 10129969
(43) Veröffentlichungstag der Anmeldung: 14.04.2004
(73) Patentinhaber: BASF Coatings AG, 48165 Münster (DE)
(72) Erfinder: BAUMGART, Hubert, 48163 Münster (DE); HASSE, Sandra, 48317 Drensteinfurt (DE); MEISENBURG, Uwe, 47051 Duisburg (DE); COOK, Vincent, 48165 Münster (DE)
(74) Vertreter: Leifert & Steffan
(86) Internationale Anmeldenummer: PCT/EP2002/006703
(87) Internationale Veröffentlichungsnummer: WO 2003/000813

(56) Entgegenhaltungen:
- EP-A- 0 889 103
- WO-A-01/23484
- WO-A-01/46285

## Beschreibung

Die Erfindung betrifft neue, Carbamat- und/oder Allophanatgruppen enthaltende, thermisch und mit aktinischer Strahlung härtbare Gemische. Außerdem betrifft die vorliegende Erfindung Verfahren zur Herstellung der neuen Carbamat- und/oder Allophanatgruppen enthaltenden, thermisch und mit aktinischer Strahlung härtbaren Gemische. Des weiteren betrifft die vorliegende Erfindung die Verwendung der neuen, Carbamat-und/oder Allophanatgruppen enthaltenden, thermisch und mit aktinischer Strahlung härtbaren Gemische als Beschichtungsstoffe, Klebstoffe und Dichtungsmassen oder zu deren Herstellung. Vor allem betrifft die vorliegende Erfindung die Verwendung der neuen, Carbamat- und/oder Allophanatgruppen enthaltenden, thermisch und mit aktinischer Strahlung härtbaren Beschichtungsstoffe als Klarlacke, insbesondere zur Herstellung von Klarlackierungen im Rahmen von farb- und/oder effektgebenden Mehrschichtlackierungen.

Unter aktinischer Strahlung ist hier und im folgenden elektromagnetische Strahlung, wie nahes Infrarot, sichtbares Licht, UV-Strahlung oder Röntgenstrahlung, insbesondere UV- Strahlung, und Korpuskularstrahlung, wie Elektronenstrahlung, zu verstehen.

Die kombinierte Härtung durch Hitze und aktinische Strahlung wird von der Fachwelt auch als Dual-Cure bezeichnet. Demgemäß werden hier und im folgenden die in Rede stehenden neuen Gemische, Beschichtungsstoffe, Klebstoffe und Dichtungsmassen als Dual-Cure-Gemische, -Beschichtungsstoffe, -Klebstoffe und -Dichtungsmassen bezeichnet.

Thermisch härtbare Beschichtungsstoffe, die Allophanatgruppen enthaltende Bestandteile umfassen, sind aus der deutschen Patentanmeldung DE 198 39 453 A1 bekannt. Diese Beschichtungsstoffe sind breit anwendbar und hervorragend für das Naß-in-naß-Verfahren zur Herstellung farb- und/oder effektgebender Mehrschichtlackierungen geeignet. Die aus den Beschichtungsstoffen hergestellten Lackierungen haben eine hohe Verträglichkeit mit anderen Lackierungen und sind kratzfest und witterungsstabil. Die Dual-Cure-Vernetzung dieser Beschichtungsstoffe wird nicht beschrieben.

Thermisch härtbare Beschichtungsstoffe, die Carbamatgruppen enthaltende niedermolekulare Verbindungen, Oligomere und/oder Polymere umfassen, sind aus den Patentanmeldungen EP 0 710 707 A2, WO 87/00851, EP 0 594 068 A1, EP 0 594 142 A1, WO 94/10211 und DE 199 46 048 A1 oder dem Patent EP 0 636 660 B1 bekannt. Die aus den bekannten Beschichtungsstoffen hergestellten Beschichtungen zeichnen sich durch eine hohe Etchbeständigkeit und Chemikalienbeständigkeit aus. Die Dual-Cure-Vemetzung dieser Beschichtungsstoffe wird in den Literaturstellen nicht beschrieben.

In der nicht vorveröffentlichten deutschen Patentanmeldung DE 199 61 926.3 werden thermisch und mit aktinischer Strahlung härtbare Dual-Cure-Gemische beschrieben, die
- mindestens einen Bestandteil, der pro Molekül im statistischen Mittel mindestens eine primäre oder sekundäre Carbamatgruppe und mindestens eine mit aktinischer Strahlung aktivierbare Bindung aufweist, und
- mindestens einen Bestandteil, der pro Molekül im statistischen Mittel mindestens eine carbamatreaktive funktionelle Gruppe sowie gegebenenfalls mindestens eine mit aktinischer Strahlung aktivierbare Bindung aufweist,
enthalten.

Die bekannten Dual-Cure-Gemische können außer den üblichen und bekannten Vernetzungsmitteln mit aktinischer Strahlung härtbare Reaktivverdünner, wie di- oder höherfunktionelle (Meth)Acrylate wie Trimethylolpropan-tri(meth)acrylat, enthalten. Dabei sind diese Zusatzstoffe aus einer langen Liste geeigneter Zusatzstoffe auszuwählen. Die Dual-Cure-Gemische können als Beschichtungsstoffe, Klebstoffe und Dichtungsmassen verwendet werden.

In der nicht vorveröffentlichten deutschen Patentanmeldung DE 100 42 152.0 werden mit aktinischer Strahlung aktivierbare Rheologiehilfsmittel mit strukturviskosem Verhalten beschrieben. Sie werden hergestellt, indem man ein Monoamin, wie Benzylamin, mit einem Polyisocyanat, wie Hexamethylendiisocyanat, in der Gegenwart einer Verbindung, die mindestens eine funktionelle Gruppe mit mindestens einer mit aktinischer Strahlung aktivierbaren Bindung aufweist, wie Dipentaerythritpentaacrylat, umsetzt. Die Rheologiehilfsmittel aus Hamstoffderivat und Dipentaerythritpentaacrylat werden zur Herstellung von Dual-Cure-Beschichtungsstoffen verwendet.

Die Dual-Cure-Beschichtungsstoffe können Bindemittel enthalten, die Allophanat- und/oder Carbamatgruppen sowie gegebenenfalls funktionelle Gruppe mit mindestens einer mit aktinischer Strahlung aktivierbaren Bindung, wie Acrylatgruppen, aufweisen. Außerdem können sie Aminoplastharze als Vernetzungsmittel enthalten. Darüber hinaus können sie auch noch übliche und bekannte, rein mit aktinischer Strahlung härtbare Bindemittel, wie (meth)acrylfunktionelle (Meth)Acrylatcopolymere, Polyetheracrylate, Polyesteracrylate, ungesättigte Polyester, Epoxyacrylate, Urethanacrylate, Aminoacrylate, Melaminacrylate, Silikonacrylate und die entsprechenden Methacrylate, und übliche und bekannte mit aktinischer Strahlung härtbare Reaktiwerdünner, die bis zu tetrafunktionell sind und in Römpp Lexikon Lacke und Druckfarben, Georg Thieme Verlag, Stuttgart, New York, 1998, »Reaktiwerdünner«, Seiten 491 und 492, beschrieben werden, wie beispielsweise Pentaerythrittetraacrylat, enthalten. Die Bindemittel, die Vernetzungsmittel, die thermisch vernetzenden komplementären reaktiven funktionellen Gruppen, die rein mit aktinischer Strahlung härtbaren Bindemittel und die mit aktinischer Strahlung härtbaren Reaktiwerdünner sind aus mehreren Listen auszuwählen, weswegen zahlreiche Kombinationsmöglichkeiten existieren. Aus den Beispielen und der Beschreibung geht hervor, daß vor allem hydroxylgruppenhaltige Bindemittel und isocyanatgruppenhaltige Vernetzungsmittel verwendet werden.

Die bisher bekannten, Carbamatgruppen und/oder Allophanatgruppen enthaltenden, thermisch härtbaren Beschichtungsstoffe, Klebstoffe und Dichtungsmassen, insbesondere die Klarlacke, weisen eine Reihe von technischen Vorteilen auf, die es bei ihrer Weiterentwicklung zu erhalten gilt. Trotz des erreichten hohen technologische Niveaus lassen die aus den bisher bekannten, Carbamatgruppen und/oder Allophanatgruppen enthaltenden, thermisch härtbaren Beschichtungsstoffen, Klebstoffen und Dichtungsmassen hergestellten Beschichtungen, Klebschichten und Dichtungen in ihrer Kratzfestigkeit und in ihrem Reflow-Verhalten noch zu wünschen übrig. Außerdem können sie nicht zusätzlich mit aktinischer Strahlung gehärtet werden.

Aufgabe der vorliegenden Erfindung ist es, neue, Carbamat- und/oder Allophanatgruppen enthaltende, thermisch und mit aktinischer Strahlung härtbare Dual-Cure-Gemische bereitzustellen, die als Dual-Cure-Beschichtungsstoffe, -Klebstoffe und -Dichtungsmassen verwendbar sind, wobei diese das hohe technologische Niveau des Standes der Technik erreichen, wenn nicht gar übertreffen sollen. Außerdem sollen die neuen Carbamat- und/oder Allophanatgruppen enthaltenden, thermisch und mit aktinischer Strahlung härtbaren Beschichtungsstoffe, Klebstoffe und Dichtungsmassen Beschichtungen, Klebschichten und Dichtungen liefern, die das hohe technologische Niveau des Standes der Technik erreichen, wenn nicht gar übertreffen, und dabei auch noch eine hohe Kratzfestigkeit und ein sehr gutes Reflow-Verhalten aufweisen. Auf und in komplex geformten dreidimensionalen Substraten sollen sie insbesondere im Durchlaufbetrieb auch bei nicht optimaler, insbesondere nicht vollständiger, Ausleuchtung der Schattenzonen mit aktinischer Strahlung ein gutes anwendungstechnisches Eigenschaftprofil, insbesondere was die Kratzfestigkeit und die Chemikalienfestigkeit betrifft, aufweisen, so daß die Härtung mit aktinischer Strahlung apparativ und meß- und regeltechnisch vereinfacht und die Prozesszeit verkürzt werden können.

Demgemäß wurden die neuen, Carbamat- und/oder Allophanatgruppen enthaltenden, thermisch und mit aktinischer Strahlung härtbaren Dual-Cure-Gemische gefunden, die
(A) mindestens einen Bestandteil, ausgewählt aus der Gruppe, bestehend aus
   (A1) Allophanatgruppen, Carbamatgruppen und Carbamat- und Allophanatgruppen enthaltenden niedermolekularen Verbindungen, Oligomeren und Polymeren, sowie
   (A2) Allophanatgruppen, Carbamatgruppen und Carbamat- und Allophanatgruppen und zusätzlich allophanat- und/oder carbomatreaktive funktionellen Gruppen enthaltenden nledermolekularen Verbindungen, Oligomeren und Polymeren,
   die im wesentlichen oder völlig frei sind von reaktiven funktionellen Gruppen, die mindestens eine mit aktinischer Strahlung aktivierbare Bindung enthalten,
   wobei die Oligomeren und Polymeren (A) aus der Gruppe, bestehend aus statistisch, alternierend und blockartig aufgebauten, linearen und verzweigten und kammartig aufgebauten (Co)Polymerisaten von ethylenisch ungesättigten Monomeren, oder Polyadditionsharzen und Polykondensationsharzen, ausgewählt werden, und wobei die (Co)Polymerisate (A) aus der Gruppe, bestehend aus (Meth)Acrylatcopolymerisaten und Polyvinylestern, und die Polyadditionsharze und Polykondensationsharze aus der Gruppe, bestehend aus Polyestern, Alkyden, Polyurethanen, Polylactonen, Polycarbonaten, Polyethern, Epoxidharz-Amin-Addukten, Polyharnstoffen, Polyamiden und Polyimiden, ausgewählt werden, und
(C) mindestens einen Bestandteil, der im statistischen Mittel mindestens eine reaktive funktionellen Gruppe mit mindestens einer mit aktinischer Strahlung aktivierbaren Bindung im Molekül enthält;
   mit der Maßgabe, daß die Dual-Cure-Gemische noch
(B) mindestens einen Bestandteil, ausgewählt aus der Gruppe, bestehend aus allophanat- und/oder carbamatreaktive funktionelle Gruppen enthaltenden niedermolekularen Verbindungen, Oligomeren und Polymeren,
   enthalten, wann ausschließlich die Bestandteile (A1) verwendet werden.

Im folgenden werden die neuen, Carbamat- und/oder Allophanatgruppen enthaltenden thermisch und mit aktinischer Strahlung härtbaren Dual-Cure-Gemische als "erfindungsgemäße Dual-Cure-Gemische" bezeichnet.

Weitere erfindungsgemäße Gegenstände, Verfahren und Verwendungen gehen aus der Beschreibung hervor.

Im Hinblick auf den Stand der Technik war es überraschend und für den Fachmann nicht vorhersehbar, daß die Aufgabe, die der vorliegenden Erfindung zugrundelag, mit Hilfe des erfindungsgemäßen Dual-Cure-Gemischs gelöst werden konnte.

Insbesondere überraschte, daß die aus den erfindungsgemäßen Dual-Cure-Gemischen hergestellten Beschichtungen, Klebstoffe und Dichtungen, insbesondere Beschichtungen, bei einer hohen Härte eine hohe Kratzfestigkeit und ein sehr gutes Reflow-Verhalten aufwiesen, weil Härte und Kratzfestigkeit häufig gegenläufige Parameter sind.

Nicht zuletzt war es überraschend, daß die erfindungsgemäßen Dual-Cure-Beschichtungsstoffe, -Klebstoffe und -Dichtungsmassen auf und in komplex geformten dreidimensionalen Substraten in den Schattenzonen im Durchlaufbetrieb auch bei nicht optimaler, insbesondere nicht vollständiger, Ausleuchtung der Schattenzonen mit aktinischer Strahlung Beschichtungen, Klebschichten und Dichtungen lieferten, die ein gutes anwendungstechnisches Eigenschaftprofil, insbesondere was die Kratzfestigkeit und die Chemikalienfestigkeit betrifft, aufwiesen, so daß die Härtung mit aktinischer Strahlung apparativ und meß- und regeltechnisch vereinfacht und die Prozesszeit verkürzt werden konnten.

Hier und im folgenden werden unter Polymeren Stoffe verstanden, die im statistischen Mittel mindestens 10 Monomereinheiten im Molekül enthalten. Unter Oligomeren werden Stoffe verstanden, die im statistischen Mittel 3 bis 15 Monomereinheiten im Molekül enthalten. Ergänzend wird zu diesen Begriffen auf Römpp Lexikon Lacke und Druckfarben, Georg Thieme Verlag, Stuttgart, New York, 1998, »Oligomere«, Seite 425, verwiesen.

Die erfindungsgemäßen Dual-Cure-Gemische enthalten mindestens ein Oligomer und/oder ein Polymer (A), ausgewählt aus der Gruppe, bestehend aus Allophanatgruppen, Carbamatgruppen oder Allophanatgruppen und Carbamatgruppen enthaltenden Oligomeren und Polymeren, die im wesentlichen oder völlig frei sind von reaktiven funktionellen Gruppen, die mindestens eine mit aktinischer Strahlung aktivierbare Bindungen enthalten.

»Im wesentlichen frei von reaktiven funktionellen Gruppen« bedeutet, daß die Bestandteile (A) einen geringen Gehalt solcher reaktiver funktioneller Gruppen aufweisen können, der beispielsweise auf die Herstellungsmethode der Komponenten (A) zurückgeht, der aber für die Vernetzung keine Rolle spielt.

Vorzugsweise werden die Oligomeren und/oder Polymeren (A) verwendet, die auch als Bindemittel bezeichnet werden.

Die allophanatgruppenhaltigen Oligomere und/oder Polymere (A) enthalten Im statistischen Mittel mindestens eine Allophanetgruppe und bevorzugt mindestens zwei, besonders bevorzugt mindestens drei und insbesondere mindestens vier Allophanatgruppen im Molekül.

Die allophanat- und carbamatgruppenhaltigen. Oligomere und/oder Polymere (A) enthalten Im statistischen Mittel mindestens eine Allophanatgruppe und mindestens eine Carbamatgruppe sowie bevorzugt mindestens zwei, besonders bevorzugt mindestens drei und insbesondere mindestens vier Allophanatgruppen und mindestens eine Carbamatgruppe, insbesondere mindestens zwei Carbamatgruppen, im Molekül.

Die Carbamatgruppen enthaltenden Oligomeren und/oder Polymere (A) enthalten im statistischen Mittel vorzugsweise mindestens eine Carbamatgruppe und bevorzugt mindestens zwei, besonders bevorzugt mindestens drei und insbesondere mindestens vier Carbamatgruppen im Molekül.

Der Gehalt der erfindungsgemäßen Dual-Cure-Gemische an den Bestandteilen (A) kann sehr breit variieren und richtet sich nach den Erfordernissen des jeweiligen Verwendungszwecks. Vorzugsweise enthalten die erfindungsgemäßen Dual-Cure-Gemische die Bestandteile (A) in einer Menge von, jeweils bezogen auf den Festkörper des erfindungsgemäßen Dual-Cure-Gemischs, 10 bis 90, bevorzugt 12 bis 85, besonders bevorzugt 14 bis 80, ganz besonders bevorzugt 16 bis 75 und insbesondere 18 bis 75 Gew.-%.

Hier und im folgenden wird unter Festkörper die Summe der Bestandteile des jeweiligen erfindungsgemäßen Dual-Cure-Gemischs verstanden, die nach der thermischen Härtung die Beschichtungen, Klebschichten oder Dichtungen aufbauen.

Die erfindungsgemäßen Dual-Cure-Gemische enthalten desweiteren mindestens einen Bestandteil (B), ausgewählt aus der Gruppe, bestehend aus allophanat- und/oder carbamatreaktive funktionelle Gruppen enthaltenden niedermolekularen Verbindungen, Oligomeren und Polymeren. Vorzugsweise werden die niedermolekularen Verbindungen (B) verwendet, die auch als Vernetzungsmittel bezeichnet werden. Die Vernetzungsmittel (B) werden dann angewandt, wenn die Bestandteile (A) keine carbamat- und/oder allophanatreaktive funktionelle Gruppen enthalten, also nicht selbstvernetzend sind.

Der Gehalt der erfindungsgemäßen Dual-Cure-Gemische an den Vernetzungsmitteln (B) kann ebenfalls breit variieren. Vorzugsweise liegt der Gehalt bei 5 bis 40, bevorzugt 6 bis 35, besonders bevorzugt 7 bis 30, ganz besonders bevorzugt 8 bis 25 und insbesondere 9 bis 20 Gew.-%, jeweils bezogen auf den Festkörper des erfindungsgemäßen Dual-Cure-Gemischs. Hierbel empfiehlt es sich desweiteren, die Mengen an Vernetzungsmittel (B) und den Oligomeren und/oder Polymeren (A1) so zu wählen, daß in den erfindungsgemäßen Dual-Cure-Gemischen das Verhältnis von komplementären reaktiven funktionellen Gruppen im Vernetzungsmittel (B) und reaktiven funktionellen Gruppen in den Bestandteilen (A1) zwischen 2 : 1 bis 1 : 2, vorzugsweise 1,5 : 1 bis 1 : 1,5, besonders bevorzugt 1,2 : 1 bis 1 : 1,2 und Insbesondere 1,1: 1 bis 1 : 1,1 liegt. Entsprechendes gilt für die selbstvernetzenden Bindemittel (A2) und für die Gemische aus Bindemitteln (A1) und (A2) und Vernetzungsmitteln (B).

Außerdem enthalten die erfindungsgemäßen Dual-Cure-Gemische mindestens einen Bestandteil (C), der Im statischen Mittel mindestens eine reaktive funktionelle Gruppe mit mindestens einer mit aktinischer Strahlung aktivierbaren Bindung im Molekül enthält. Darüber hinaus kann der Bestandteil (C) noch mindestens eine allophanat- und/oder carbamatreaktive funktionelle Gruppe enthalten.

Der Gehalt der erfindungsgemäßen Dual-Cure-Gemische an den Bestandteilen (C) kann ebenfalls breit variieren. Vorzugsweise liegt der Gehalt bei 5 bis 50, bevorzugt 6 bis 45, besonders bevorzugt 7 bis 40, ganz besonders bevorzugt 8 bis 35 und insbesondere 9 bis 30 Gew.-%, jeweils bezogen auf den Festkörper des erfindungsgemäßen Dual-Cure-Gemischs.

Darüber hinaus können die erfindungsgemäßen Dual-Cure-Gemische noch mindestens ein Rheologiehilfsmittel (D) mit strukturviskosem Verhalten enthalten. Vorzugsweise wird das Rheologiehilfsmittel (D) aus der Gruppe, bestehend aus Harnstoffderivaten und Kieselsäuren ausgewählt.

Der Gehalt der erfindungsgemäßen Dual-Cure-Gemische an den Rheologiehilfsmitteln (D) kann sehr breit variieren. Vorzugsweise enthalten die erfindungsgemäßen Dual-Cure-Gemische die Rheologiehilfsmittel (D), in einer Menge von, jeweils bezogen auf den Festkörper des erfindungsgemäßen Dual-Cure-Gemischs, 0,1 bis 10, bevorzugt 0,2 bis 9, besonders bevorzugt 0,3 bis 8, ganz besonders bevorzugt 0,4 bis 7 und insbesondere 0,5 bis 6 Gew.-%.

Die erfindungsgemäßen Dual-Cure-Gemische können außerdem noch mindestens ein Netzmittel (E) enthalten.

Sofern verwendet, sind die Netzmittel (E) in den erfindungsgemäßen Dual-Cure-Gemischen vorzugsweise in einer Menge von, jeweils bezogen auf den Festkörper des erfindungsgemäßen Dual-Cure-Gemischs, 0,01 bis 5, bevorzugt 0,02 bis 4, besonders bevorzugt 0,03 bis 3, ganz besonders bevorzugt 0,04 bis 2 insbesondere 0,05 bis 1 Gew.-% enthalten.

Darüber hinaus können die erfindungsgemäßen Dual-Cure-Gemische noch übliche und bekannte Pigmente (F) und/oder Zusatzstoffe (G) enthalten.

Geeignete Bindemittel (A) entstammen den Polymerklassen der statistisch, alternierend und/oder blockartig aufgebauten linearen und/oder verzweigten und/oder kammartig aufgebauten (Co)Polymerisate von ethylenisch ungesättigten Monomeren, oder Polyaddltionsharze und/oder Polykondensationsharze. Zu diesen Begriffen wird ergänzend auf Römpp Lexikon Lacke und Druckfarben, Georg Thieme Verlag, Stuttgart, New York, 1998, Seite 457, »Polyaddition« und »Polyadditionsharze (Polyaddukte)«, sowie Seiten 463 und 464, »Polykondensate«, »Polykondensation« und »Polykondensationsharze« verwiesen.

Beispiele gut geeigneter (Co)Polymerisate (A) sind (Meth)Acrylatcopolymerisate und partiell verseifte Polyvinylester, insbesondere (Meth)Acrylatcopolymerisate.

Beispiele gut geeigneter Polyadditionsharze und/oder Polykondensationsharze (A) sind Polyester, Alkyde, Polyurethane, Polylactone, Polycarbonate, Polyether, Epoxidharz-Amin-Addukte, Polyharnstoffe, Polyamide oder Polyimide, insbesondere Polyester.

Ganz besonders bevorzugt entstammen die Oligomeren und/oder Polymeren (A) den Polymerklassen der (Meth)acrylatcopolymerisate und Polyester.

Allophanatgruppen enthaltende Oligomere und Polymere (A), die den vorstehend genannten Polymerklassen entstammen, sind aus der deutschen Patentanmeldung DE 198 39 453 A1, Seite 2, Zeile 65, bis Seite 6, Zeile 34, und Seite 7, Zeilen 25 bis 53, bekannt.

Carbamatgruppen enthaltenden Oligomere und Polymere (A), die den vorstehend genannten Polymerklassen entstammen, und Verfahren zu ihrer Herstellung sind aus den Patentanmeldungen
- EP 0 594 068 A1, Seite 2, Zeile 45, bis Seite 4, Zeile 27, Seite 5, Zeile 36 bis 57, und Seite 7, Zeilen 1 bis 22,
- EP 0 594 142 A1, Seite 3, Zeile 1, bis Seite 4, Zeile 37, Seite 5, Zeile 49, bis Seite 6, Zeile 12, und Seite 7, Zeilen 5 bis 26,
- WO 94/10211, Seite 4, Zeile 18, bis Seite 8, Zeile 8, Seite 12, Zeile 30, bis Seite 14, Zeile 36, Seite 15, Zeile 35, bis Seite 17, Zeile 32, und Seite 18, Zeile 16, bis Seite 19, Zeile 30, und
- DE 199 46 048 A1
bekannt.

Bevorzugt werden die Oligomeren und/oder Polymeren (A) hergestellt, indem man ein Monomerengemisch, das mindestens eine olefinisch ungesättigte Carbonsäure, beispielsweise Methacrylsäure enthält, in der Gegenwart eines Glycidylesters der Versatic ®-Säure (vgl. Römpp Lexikon Lacke und Druckfarben, Georg Thieme Verlag, Stuttgart New York, 1998 »Versatic ®-Säuren«, Seiten 605 und 606) copolymerisiert, wonach man das resultierende hydroxylgruppenhaltige (Meth)Acrylatcopolymerisat mit mindestens einem Alkylcarbamat, wie Methyl-, Propyl- oder Butylcarbamat, umsetzt. Oder aber hydroxylgruppenhaltige (Meth)Acrylatcopolymerisate werden mit Phosgen in Chlorformiatgruppen enthaltende (Meth)Acrylatcopolymerisate umgewandelt, wonach die Chlorformiatgruppen mit Ammoniak oder primären Aminen zu Carbamatgruppen umgesetzt werden. Es können auch isocyanatgruppenhaltige (Meth)Acrylatcopolymerisate oder Polyester mit mindestens einem Hydroxyalkylcarbamat, wie 2-Hydroxyethylcarbamat, umgesetzt werden.

Vorzugsweise weisen die Oligomeren und Polymeren (A) ein zahlenmittleres Molekulargewicht von 600 bis 20.000, bevorzugt 800 bis 15.000, besonders bevorzugt 1.000 bis 10.000, ganz besonders bevorzugt 1.200 bis 8.000 und insbesondere 1.200 bis 6.000 Dalton auf.

Außer den Allophanat- und/oder Carbamatgruppen können die Bestandteile (A), insbesondere die Oligomeren und/oder Polymeren (A), noch mindestens eine funktionelle Gruppe, ausgewählt aus der Gruppe, bestehend aus
(i) allophanat- und carbamatreaktiven funktionellen Gruppen,
(ii) dispergierenden Gruppen, durch die die Oligomeren und/oder Polymeren (A) wasserlöslich oder -dispergierbar gemacht werden,
enthalten.

Beispiele geeigneter allophanat- und/oder carbamatreaktiver funktioneller Gruppen (i) sind N-Methylolgruppen und N-Methylolethergruppen, vorzugsweise die Methyl-, Ethyl-, n-Propyl und/oder n-Butylether. Die betreffenden Bestandteile (A2), insbesondere die Oligomeren und/oder Polymeren (A2), sind dann partiell oder vollständig selbstvernetzend, weswegen in diesem Falle auf den Einsatz von Vernetzungsmitteln (B) völlig oder weitgehend verzichtet werden kann.

Beispiele geeigneter dispergierender Gruppen (ii) sind Anionen bildende Gruppen, wie Carbonsäure-, Sulfonsäure- oder Phosphonsäuregruppen, oder anionische Gruppen, wie Carboxylat-, Sulfonat- oder Phosphonatgruppen, Kationen bildende Gruppen, wie primäre, sekundäre oder tertiäre Aminogruppen, oder kationische Gruppen, beispielsweise Ammoniumgruppen, wie primäre sekundäre, tertiäre oder quaternäre Ammoniumgruppen, Sulfoniumgruppen und Phosphononiumgruppen, oder Polyalkylenoxidgruppen, wie Polyethylenoxidgruppen, die seitenständig, endständig und/oder kettenständig in die Oligomeren und Polymeren (A) eingebaut werden können (vgl. Römpp Lexikon Lacke und Druckfarben, Georg Thieme Verlag, Stuttgart, New York, 1998, »Wasserdispergierbare Bindemittel«, Seite 619, und »Wasserlösliche Bindemittel«, Seite 626 und 625).

Auch die Herstellung der Oligomeren und/oder Polymeren (A), die die vorstehend beschriebenen Gruppen (i) und/oder (ii) enthalten, weist keine methodischen Besonderheiten auf, sondern erfolgt mit Hilfe der Verfahren und Vorrichtungen, die aus den vorstehend aufgeführten Patentanmeldungen bekannt sind oder in der nicht vorveröffentlichten deutschen Patentanmeldung DE 199 61 926.3 beschrieben werden.

So können beispielsweise Gruppen (i) durch das Einpolymerisieren N-methylolethergruppenhaltiger olefinisch ungesättigter Monomere oder über polymeranaloge Reaktionen seitenständiger und/oder endständiger Aminogruppen mit Formaldehyd eingeführt werden.

Gruppen (ii) können beispielsweise durch Einpolymerisieren olefinisch ungesättigter Carbonsäuren wie Acrylsäure oder Methacrylsäure oder über die polymeranaloge Reaktion von Hydroxylgruppen mit Carbonsäureanhydriden, wie Maleinsäureanhydrid oder Phthalsäureanhydrid, eingebaut werden.

Geeignete Vernetzungsmittel (B) sind Aminoplastharze.

Als Aminoplastharze kommen grundsätzlich alle formaldehydhaltigen Harze in Betracht, wie sie auf dem Gebiet der Beschichtungsstoffe, Klebstoffe und Dichtungsmassen üblicherweise als Vernetzungsmittel verwendet werden. Vorzugsweise werden Melaminharze eingesetzt.

Beispiele geeigneter Aminoplastharze werden in Römpp Lexikon Lacke und Druckfarben, Georg Thieme Verlag, 1998, Seite 29, »Aminoharze«, dem Lehrbuch "Lackadditive" von Johan Bieleman, Wiley-VCH, Weinheim, New York, 1998, Seiten 242 ff., dem Buch "Paints, Coatings and Solvents", second completely revised edition, Edit. D. Stoye und W. Freitag, Wiley-VCH, Weinheim, New York, 1998, Seiten 80 ff., dem amerikanischen Patent US 4 710 542 A oder den Patentanmeldungen EP 0 245 700 A1 oder WO 00/37520, Seite 3, Zeilen 1 bis 13, sowie in dem Artikel von B. Singh und Mitarbeiter "Carbamylmethylated Melamines, Novel Crosslinkers for the Coatings Industry", in Advanced Organic Coatings Science and Technology Series, 1991, Band 13, Seiten 193 bis 207, beschrieben.

Die mit aktinischer Strahlung härtbaren Bestandteile (C) enthalten im Molekül im statistischen Mittel mindestens eine reaktive funktionelle Gruppe, vorzugsweise mindestens zwei, besonders bevorzugt mindestens drei und insbesondere drei reaktive funktionelle Gruppen, die mindestens eine, insbesondere eine, mit aktinischer Strahlung aktivierbare Bindung enthält oder enthalten.

Außerdem können die Bestandteile (C) mindestens eine der vorstehend beschriebenen allophanat- und/oder carbamatreaktiven funktionellen Gruppen enthalten.

Beispiele geeigneter mit aktinischer Strahlung aktivierbarer Bindungen sind Kohlenstoff-Wasserstoff-Einzelbindungen oder Kohlenstoff-Kohlenstoff-, Kohlenstoff-Sauerstoff-, Kohlenstoff-Stickstoff-, Kohlenstoff-Phosphor- oder Kohlenstoff-Silizium-Einzelbindungen oder - Doppelbindungen. Von diesen werden die Doppelbindungen, insbesondere die Kohlenstoff-Kohlenstoff-Doppelbindungen (nachstehend "Doppelbindungen" genannt, bevorzugt angewandt.

Gut geeignete Doppelbindungen liegen beispielsweise in (Meth)Acrylat-, Ethacrylat-, Crotonat-, Cinnamat-, Vinylether-, Vinylester-, Ethenylarylen-, Dicyclopentadienyl-, Norbornenyl-, Isoprenyl-, Isoprenyl-, Isopropenyl-, Allyl- oder Butenylgruppen; Ethenylarylen-, Dicyclopentadienyl-, Norbornenyl-, Isoprenyl-, Isopropenyl-, Allyl- oder Butenylethergruppen oder Ethenylarylen-, Dicyclopentadienyl-, Norbornenyl-, Isoprenyl-, Isopropenyl-, Allyl- oder Butenylestergruppen vor. Von diesen sind (Meth)Acrylatgruppen, insbesondere Acrylatgruppen, von besonderem Vorteil und werden deshalb erfindungsgemäß ganz besonders bevorzugt verwendet.

Der Grundkörper, an den die Doppelbindungen gebunden sind, ist nicht kritisch, sondern es können beispielsweise Polymere und/oder Oligomere verwendet werden, die den vorstehend bei den Bindemitteln (A) beschriebenen Polymerklassen entstammen. Die Doppelbindungen können in üblicher und bekannter Weise über polymeranaloge Reaktionen von seitenständigen und/oder endständigen Hydroxylgruppen mit olefinisch ungesättigten Monoisocyanaten, wie Vinylisocyanat, Methacryloylisocyanat oder 1-(1-Isocyanato-1-methylethyl)-3-(1-methylethenyl)-benzol (TMI® von der Firma CYTEC), von seitenständigen und/oder endständigen Isocyanatgruppen mit hydroxylgruppenhaltigen olefinisch ungesättigten Monomeren wie Hydroxyethylacrylat oder von seitenständigen und/oder endständigen Epoxidgruppen mit olefinisch ungesättigten Carbonsäuren, wie Acrylsäure oder Methacrylsäure, eingebaut werden.

Beispiele geeigneter Bestandteile (C), die bis zu vier Doppelbindungen, enthalten, werden in Römpp Lexikon Lacke und Druckfarben, Georg Thieme Verlag, Stuttgart, New York, 1998, »Reaktivverdünner«, Seiten 491 und 492, oder in der deutschen Patentanmeldung DE 198 18 735 A 1 ,Spalte 7, Zeilen 1 bis 25, beschrieben.

Beispiele geeigneter Bestandteile (C), die sechs oder mehr Doppelbindungen im Molekül enthalten, sind (meth)acrylfunktionelle (Meth)Acrylcopolymere, Polyetheracrylate, Polyesteracrylate, ungesättigte Polyester, Epoxyacrylate, Urethanacrylate, Aminoacrylate, acrylierte Aminoplastharze wie Melaminacrylate, Silikonacrylate und die entsprechenden Methacrylate. Von diesen sind die Urethan(meth)acrylate (C) vorteilhaft und werden deshalb besonders bevorzugt verwendet.

Die Urethan(meth)acrylate (C) und Verfahren zu ihrer Herstellung sind beispielsweise aus den Patentanmeldungen und Patenten EP 0 204 161 A1 DE 196 45 761 A1, WO 98/10028, EP 0 742 239 A1, EP 0 661 321 B1, EP 0 608 021 B1, EP 0 447 998 B1, oder EP 0 462 287 B1 bekannt. Die Urethan(meth)acrylate (C) sind handelsübliche Produkte und werden beispielsweise unter der Marke Ebecryl ® 1290 von der Firma UCB, Belgien, oder unter der Marke Rahn ® 99-664 von der Firma Rahn vertrieben.

Weitere Beispiele geeigneter Bestandteile (C) sind aus der deutschen Patentanmeldung DE 198 18 735 A1, Spalte 2, Zeilen 24 bis 36, Spalte 3, Zeile 16, bis Spalte 6, Zeile 33, und Spalte 6, Zeilen 34 bis 68, bekannt. Gut geeignete Beispiele sind Pentaerythrittriacrylat, das unter der Marke Sartomer ® 444 D von der Firma Cray Valley, Frankreich, vertrieben wird, sowie Dipentaerythritpentaacrylat, das unter der Marke Sartomer ® 399 von derselben Firma vertrieben wird.

Die Rheologiehilfsmittel (D) werden ausgewählt aus der Gruppe, bestehend aus Harnstoffderivaten und Kieselsäuren.

Geeignete Rheologiehilfsmittel (D) werden beispielsweise in den Literaturstellen EP 0 192 304 A1, DE 23 59 923 A1, DE 18 05 693 A1, WO 94/22968, DE 27 51 761 C2, WO 97/12945 und "farbe + lack", 11/1992, Seiten 829 ff., WO 00/31194, WO 00/37520, DE 199 24 172 A1, DE 199 24 171 A1 oder DE 199 24 170 A1 bekannt.

Bevorzugt werden Rheologiehilfsmittel (D) verwendet, die durch Umsetzung mindestens eines Amins und/oder von Wasser mit mindestens einem Isocyanat, in der Gegenwart mindestens eines Aminoplastharzes und/oder mindestens eines der vorstehend beschriebenen Oligomeren und/oder Polymeren (A) herstellbar sind. Vorzugsweise werden zu deren Herstellung die Amine verwendet.

Vorzugsweise werden die Amine aus der Gruppe, bestehend aus acyclischen aliphatischen, aliphatisch-aromatischen, cycloaliphatischen, aliphatisch-cycloaliphatischen und cycloaliphatisch-aromatischen primären und sekundären Monoaminen und Polyaminen, ausgewählt.

Beispiele geeigneter Monoamine sind aus den deutschen Patentanmeldungen DE 199 24 172 A1, Seite 3, Zeilen 3 bis 10, oder DE 199 24 171 A1, Seite 3, Zeilen 35 bis 42, oder den internationalen Patentanmeldungen WO 00/31194, Seite 11, Zeilen 14 bis 29, und WO 00/37520, Seite 3, Zeile 15, bis Seite 4, Zeile 5, bekannt. Besonders bevorzugt werden Methoxypropylamin, Benzylamin und/oder n-Hexylamin verwendet.

Die Polyamine enthalten im statistischen Mittel mindestens zwei primäre und/oder sekundäre Aminogruppen im Molekül. Beispiele geeigneter Polyamine sind aus der internationalen Patentanmeldung WO 00/37520, Seite 4, Zeilen 6 bis 19, bekannt.

Als Isocyanate kommen Monoisocyanate und Polyisocyanate in Betracht. Die Monoisocyanate werden für die Umsetzung mit den Polyaminen und die Polyisocyanate für die Umsetzung mit den Monoaminen eingesetzt. Vorzugsweise werden die Polyisocyanate und die Monoamine für die Herstellung der Rheologiehilfsmittel (D) verwendet.

Beispiele geeigneter Monoisocyanate sind aus der internationalen Patentanmeldung WO 00/37520, Seite 4, Zeile 21, bis Seite 5, Zeile 2, bekannt.

Vorzugsweise werden Polyisocyanate verwendet, die im statistischen Mittel mindestens 1,8, bevorzugt mindestens 2 und insbesondere 2 Isocyanatgruppen im Molekül aufweisen. Beispiele geeigneter Polyisocyanate und Diisocyanate werden in den internationalen Patentanmeldungen WO 00/31194, Seite 11, Zeile 30, bis Seite 12, Zeile 26, und WO 00/37520, Seite 5, Zeile 4, bis Seite 6, Zeile 27, oder den deutschen Patentanmeldungen DE 199 24 172 A1, Seite 3, Zeilen 11 bis 23, DE 199 24 170 A1, Spalte 3, Zeile 61, bis Spalte 6, Zeile 68, oder DE 199 24 171 A1, Seite 3, Zeilen 43, bis Seite 5, Zeile 34, im Detail beschrieben. Besonders bevorzugt wird Hexamethylendiisocyanat und seine Oligomeren, insbesondere Trimeren, verwendet.

Als Aminoplastharze kommen grundsätzlich alle formaldehydhaltigen Harze in Betracht, wie sie auf dem Gebiet der Beschichtungsstoffe, Klebstoffe und Dichtungsmassen üblicherweise als Vernetzungsmittel (B) verwendet werden. Vorzugsweise werden Melaminharze eingesetzt. Die Menge an Aminoplastharzen, die durch die Rheologiehilfsmittel (D) in die erfindungsgemäßen Dual-Cure-Gemische eingetragen wird, wird in ihren Gehalt an Vernetzungsmitteln (B) einbezogen.

Geeignete Oligomere und Polymere (A) sind die vorstehend beschriebenen. Die Menge an Bestandteilen (A), die durch die Rheologiehilfsmittel (D) in die erfindungsgemäßen Dual-Cure-Gemische eingetragen wird, wird in ihren Gehalt an Bindemitteln (A) einbezogen.

Die Umsetzung der Amine oder von Wasser, insbesondere der Amine, mit den Isocyanaten in der Gegenwart der Aminoplastharze weist keine methodischen Besonderheiten auf, sondern erfolgt, wie in der internationalen Patentanmeldung WO 00/37520, Seite 6, Seite 29, bis Seite 8, Zeile 14, und Seite 9, Zeile 28, bis Seite 10, Zeile 32, beschrieben.

Die Umsetzung der Amine oder von Wasser, insbesondere der Amine, mit den Isocyanaten in der Gegenwart der Oligomeren und/oder Polymeren (A) weist ebenfalls keine methodischen Besonderheiten auf, sondern erfolgt, wie in der internationalen Patentanmeldung WO 00/31194, Seite 12, Zeile 23, bis Seite 13, Zeile 19, beschrieben

Für die Herstellung der Harnstoffderivate (D) im Tonnenmaßstab ist das aus der deutschen Patentanmeldung DE 199 03 283 A1 bekannte kontinuierliche Verfahren, bei dem ein In-line-Dissolver als Mischaggregat verwendet wird, von Vorteil. Dabei kann das Gewichtsverhältnis von Aminoplastharz und/oder Oligomer und/oder Polymer (A) zu Rheologiehilfsmittel (D) 100 : 1, vorzugsweise 90 : 1, bevorzugt 80 : 1, besonders bevorzugt 70 : 1, ganz besonders bevorzugt 60 : 1 und insbesondere 50 : 1 betragen.

Aminoplastharze (B), die in dieser Weise hergestellte Rheologiehilfsmittel (D) enthalten, sind üblich und bekannt und werden beispielsweise unter der Marke Setamine ® XL 1268 von der Firma Akzo Nobel vertrieben.

Die als Rheologiehilfsmittel (D) verwendeten Kieselsäuren werden aus der Gruppe, bestehend aus modifizierten pyrogenen, hydrophilen und hydrophoben, transparenten Kieselsäuren, ausgewählt. Besonders bevorzugt werden hydrophobe pyrogene Siliziumdioxide verwendet, deren Agglomerate und Aggregate eine kettenförmige Struktur haben und die durch die Flammenhydrolyse von Siliziumtetrachlorid in einer Knallgasflamme herstellbar sind. Vorzugsweise haben sie eine Primärteilchengröße von 2 bis 20 nm. Sie werden beispielweise von der Firma Degussa unter der Marke Aerosil ® vertrieben. Besonders bevorzugt werden auch gefällte Wassergläser, wie Nanohektorite, die beispielsweise von der Firma Südchemie unter der Marke Optigel ® oder von der Firma Laporte unter der Marke Laponite ® vertrieben werden, verwendet. Weitere Beispiele geeigneter Kieselsäuren sind aus der deutschen Patentanmeldung DE 199 24 172 A1, Seite 3, Zeilen 28 bis 32, bekannt. Noch ein weiteres Beispiel für geeignete hydrophile, transparente Kieselsäuren ist Aerosil ® 380 mit einer inneren Oberfläche von 380 m²/g (gemessen nach BET gemäß DIN 66131).

Bevorzugt werden Netzmittel (E) i. S. der Definition von Römpp Lexikon Lacke und Druckfarben, Georg Thieme Verlag, Stuttgart, New York, 1998 »Netzmittel (Benetzungsmittel)«, Seite 409, verwendet.

Vorzugsweise werden Netzmittel (E) werden aus der Gruppe, bestehend aus Siloxanen, fluorhaltigen Verbindungen, Carbonsäurehalbestern, Phosphorsäureestern, Polyacrylsäuren und deren Copolymeren sowie Polyurethanen, ausgewählt. Vorzugsweise werden Polyurethane verwendet.

Weitere geeignete Netzmittel (E) werden in Johan Bieleman, »Lackadditive«, Wiley-VCH, Weinheim, New York, 1998, »4 Grenzflächenaktive Verbindungen«, Seite 69 bis 100, insbesondere »4.1.4 Chemische Zusammensetzung der Netz- und Dispergiermittel«, Seiten 87 bis 92, und »4.1.8 Handelsprodukte«, Seite 100, oder in der deutschen Patentanmeldung DE 199 24 171 A1, Seite 2, Zeile 63, bis Seite 3, Zeile 24, beschrieben.

Gut geeignete Netzmittel (E) sind beispielsweise die Handelsprodukte
- Texaphor ® 963 der Firma Cognis (niedermolekulares Elektroneutralsalz eine Polycarbonsäure mit Aminderivaten, 50prozentig in höheren Aromaten),
- Texaphor ® 3112 der Firma Cognis (hochmolekulares Polyurethan, 50prozentig in Xylol / Butylacetat 2:3),
- Disperbyk ® 110 der Firma Byk Chemie (anionisches Copolymerisat mit sauren Gruppen, Säurezahl: 53 mg KOH/g, 50prozentig in Methoxypropylacetat / Alkylbenzol 1:1),
- Disperbyk ® 161 der Firma Byk Chemie (hochmolekulares Polyurethan, Aminzahl: 11 mg KOH/g, 30prozentig in Methoxypropylacetat / Butylacetat 6:1),
- Disperbyk ® 166 der Firma Byk Chemie (hochmolekulares Polyurethan, Aminzahl: 20 mg KOH/g, 30prozentig in Butylacetat /Methoxypropylacetat 4:1),
- Efka ® 4163 der Firma Efka (hochmolekulares Polyurethan, Aminzahl: 11 mg KOH/g, 30prozentig in Methoxypropylacetat /Butylacetat 6:1) und
- Efka ® 4047 der Firma Efka (hochmolekulares Polyurethan, Aminzahl 10 bis 20 mg KOH/g, 35prozentig in Butylacetat/Methoxypropylacetat/sekundär-Butanol).

Die erfindungsgemäßen Dual-Cure-Gemische können noch mindestens ein Pigment (F) enthalten.

Vorzugsweise werden die Pigmente (F) aus der Gruppe bestehend, aus üblichen und bekannten organischen und anorganischen farb- und/oder effektgebenden, elektrisch leitfähigen, magnetisch abschirmenden und fluoreszierenden Pigmenten und üblichen und bekannten organischen und anorganischen Füllstoffen und Nanopartikeln, die von den Rheologiehilfsmitteln (D) verschieden sind, ausgewählt.

Diese Pigmente (F) werden insbesondere dann verwendet, wenn die erfindungsgemäßen Dual-Cure-Gemische als pigmentierte Klebstoffe und Dichtungsmassen sowie Beschichtungsstoffe, wie Füller, Basislacke oder Unidecklacke, verwendet werden sollen.

Ferner können die erfindungsgemäßen Dual-Cure-Gemische Zusatzstoffe (G) enthalten, die sowohl in den pigmentierten als auch in den nicht pigmentierten erfindungsgemäßen Dual-Cure-Gemischen verwendet werden können. Beispiele geeigneter Zusatzstoffe (G) sind aus den deutschen Patentanmeldungen DE 199 24 170 A1, Spalte 13, Seite 6, bis Spalte 14, Zeile 2, DE 199 24 171 A1, Seite 8, Zeile 65, bis Seite 9, Zeile 33, oder DE 198 39 453 A1, Seite 6, Zeile 68, bis Seite 7, Seite 6, bekannt, wobei die Netzmittel (E) und die transparenten Füllstoffe auf der Basis von Siliziumdioxid hier ausgenommen sind.

Des weiteren können als Zusatzstoffe (G) Verbindungen verwendet werden, die Carbamatgruppen oder carbamatreaktive funktionelle Gruppen sowie reaktive funktionelle Gruppen mit mindestens einer mit aktinischer Strahlung aktivierbaren Bindung enthalten, wie sie in den nicht vorveröffentlichten deutschen Patentanmeldungen DE 199 61 926.3 oder DE 100 41 634.9 beschrieben werden.

Nicht zuletzt können die erfindungsgemäßen Dual-Cure-Gemische Photoinitiatoren Zusatzstoffe (G) enthalten. Geeignete Photoinitiatoren (G) sind solche vom Norrish II-Typ, deren Wirkungsmechanismus auf einer intramolekularen Variante der Wasserstoff-Abstraktionsreaktionen beruht, wie sie in vielfältiger Weise bei photochemischen Reaktionen auftreten (beispielhaft sei hier auf Römpp Chemie Lexikon, 9. erweiterte und neubearbeitete Auflage, Georg Thieme Verlag Stuttgart, Bd. 4, 1991, verwiesen) oder weitere Beispiele von kationische Photoinitiatoren (beispielhaft sei hier auf Römpp Lexikon Lacke und Druckfarben, Georg Thieme Verlag Stuttgart, 1998, Seiten 444 bis 446, verwiesen), insbeondere Benzophenone, Benzoine oder Benzoinether oder Phosphinoxide. Es können auch beispielsweise die im Handel unter den Namen Irgacure® 184, Irgacure® 1800 und Irgacure® 500 der Firma Ciba Geigy, Grenocure® MBF der Firma Rahn und Lucirin® TPO der Firma BASF AG erhältlichen Produkte eingesetzt werden.

Die Herstellung der erfindungsgemäßen Dual-Cure-Gemische weist keine methodischen Besonderheiten auf, sondern erfolgt durch das Vermischen der vorstehend beschriebenen Bestandteile. Dabei können Mischaggregate, wie Rührkessel, Dissolver, In-line-Dissolver, Rührwerksmühlen, statische Mischer, Zahnkranz-Dispergatoren oder Extruder, verwendet werden. Hierbei wird vorzugsweise unter Ausschluß von aktinischer Strahlung gearbeitet, um eine Schädigung der erfindungsgemäßen Dual-Cure-Gemische, insbesondere durch eine vorzeitige Vernetzung, zu vermeiden.

Die erfindungsgemäßen Gemische können je nach Verwendungszweck in organischen Lösemitteln gelöst und/oder dispergiert (non-aqueous dispersions, NAD) oder als im wesentlichen oder völlig Iösemittelfreie Gemische vorliegen. Die im wesentlichen oder völlig Iösemittelfreie Gemische können in flüssiger Formen (100%-System) oder Pulverform vorliegen. Des weiteren können die erfindungsgemäßen Gemische in Wasser gelöst oder dispergiert vorliegen. Nicht zuletzt können die pulverförmigen erfindungsgemäßen Gemische in der Form sogenannter Pulverslurries in Wasser dispergiert vorliegen. Vorzugsweise liegen die erfindungsgemäßen Gemische in organischen Lösemitteln gelöst und/oder dispergiert vor.

Die erfindungsgemäßen Dual-Cure-Gemische eignen sich hervorragend als Dual-Cure-Beschichtungsstoffe, -Klebstoffe und -Dichtungsmassen oder zu deren Herstellung. Die erfindungsgemäßen Dual-Cure-Beschichtungsstoffe sind hervorragend für die Herstellung von ein- oder mehrschichtigen, farb- und/oder effektgebenden, elektrisch leitfähigen, magnetisch abschirmenden oder fluoreszierenden Beschichtungen, wie Füllerlackierungen, Basislackierungen oder Unidecklackierungen, oder von ein- oder mehrschichtigen Klarlackierungen geeignet. Die erfindungsgemäßen Dual-Cure-Klebstoffe sind hervorragend für die Herstellung von Klebschichten, und die erfindungsgemäßen Dual-Cure-Dichtungsmassen sind hervorragend für die Herstellung von Dichtungen geeignet.

Ganz besondere Vorteile resultieren bei der Verwendung der erfindungsgemäßen Dual-Cure-Gemische als Dual-Cure-Klarlacke für die Herstellung von ein- oder mehrschichtigen Klarlackierungen. Insbesondere werden die erfindungsgemäßen Dual-Cure-Klarlacke zur Herstellung von farb- und/oder effektgebenden Mehrschichtlackierungen nach dem naß-in-naß Verfahren verwendet, bei dem ein Basislack, insbesondere ein Wasserbasislack, auf die Oberfläche eines Substrats appliziert wird, wonach man die resultierende Basislackschicht, ohne sie auszuhärten, trocknet und mit einer Klarlackschicht überschichtet. Anschließend werden die beiden Schichten gemeinsam gehärtet.

Methodisch weist die Applikation der erfindungsgemäßen Dual-Cure-Beschichtungsstoffe, -Klebstoffe und -Dichtungsmassen keine Besonderheiten auf, sondern kann durch alle üblichen Applikationsmethoden, wie z.B. Spritzen, Rakeln, Streichen, Gießen, Tauchen, Träufeln oder Walzen erfolgen. Vorzugsweise werden bei den erfindungsgemäßen Beschichtungsstoffen Spritzapplikationsmethoden angewandt, es sei denn, es handelt sich um Pulverlacke, die vorzugsweise mit Hilfe der Wirbelschichtverfahren, wie sie beispielsweise aus den Firmenschriften von BASF Coatings AG, »Pulverlacke, für industrielle Anwendungen«, Januar 2000, oder »Coatings Partner, Pulverlack Spezial«, 1/2000, oder Römpp Lexikon Lacke und Druckfarben, Georg Thieme Verlag, Stuttgart, New York, 1998, Seiten 187 und 188, »Elektrostatisches Pulversprühen«, »Elektrostatisches Sprühen« und »Elektrostatisches Wirbelbadverfahren«, bekannt sind, appliziert werden.

Auch hier empfiehlt es sich unter Ausschluß von aktinischer Strahlung zu arbeiten, um eine vorzeitige Vernetzung der erfindungsgemäßen Dual-Cure-Beschichtungsstoffe, -Klebstoffe und -Dichtungsmassen zu vermeiden.

Als Substrate kommen all die in Betracht, deren Oberfläche durch die Anwendung von Hitze und aktinischer Strahlung bei der Härtung der hierauf befindlichen Schichten nicht geschädigt wird. Vorzugsweise bestehen die Substrate aus Metallen, Kunststoffen, Holz, Keramik, Stein, Textil, Faserverbunden, Leder, Glas, Glasfasern, Glas- und Steinwolle, mineral- und harzgebundene Baustoffen, wie Gips- und Zementplatten oder Dachziegel, sowie Verbunden dieser Materialien.

Demnach sind die erfindungsgemäßen Beschichtungsstoffe, Klebstoffe und Dichtungsmassen für das Beschichten, Verkleben und Abdichten von Kraftfahrzeugkarosserien oder Teilen hiervon, von Kraftfahrzeugen im Innen- und Außenbereich, von Bauwerken im Innen- und Außenbereich, von Möbeln, Fenstern und Türen sowie im Rahmen der industriellen Lackierung für das Beschichten, Verkleben und Abdichten von Kleinteilen, wie Muttern, Schrauben, wie Radkappen oder Felgen, von Coils, Container, Emballagen, elektrotechnischen Bauteilen, wie Motorwicklungen oder Transformatorwicklungen, und von weißer Ware, wie Haushaltsgeräte, Heizkessel und Radiatoren, hervorragend geeignet,

Im Falle elektrisch leitfähiger Substrate können Grundierungen verwendet werden, die in üblicher und bekannter Weise aus Elektrotauchlacken hergestellt werden. Hierfür kommen sowohl anodische als auch kathodische Elektrotauchlacke, insbesondere aber kathodische Elektrotauchlacke, in Betracht. Im Falle von nichtfunktionalisierten und/oder unpolaren Kunststoffoberflächen können diese vor der Beschichtung in bekannter Weise einer Vorbehandlung, wie mit einem Plasma oder mit Beflammen, unterzogen oder mit einer Hydrogrundierung versehen werden.

Auch die Härtung der applizierten erfindungsgemäßen Dual-Cure-Gemische weist keine methodischen Besonderheiten auf, sondern erfolgt nach den üblichen und bekannten thermischen Methoden, wie Erhitzen in einem Umluftofen oder Bestrahlen mit IR-Lampen. Für die Härtung mit aktinischer Strahlung kommen Strahlenquellen wie Quecksilberhoch- oder -niederdruckdampflampen, welche gegebenenfalls mit Blei dotiert sind, um ein Strahlenfenster bis zu 405 nm zu öffnen, oder Elektronenstrahlquellen in Betracht. Weitere Beispiele geeigneter Verfahren und Vorrichtungen zur Härtung mit aktinischer Strahlung werden in der deutschen Patentanmeldung DE 198 18 735 A1, Spalte 10, Zeilen 31 bis 61, beschrieben.

Die resultierenden erfindungsgemäßen Beschichtungen, insbesondere die erfindungsgemäßen ein- oder mehrschichtigen farb- und/oder effektgebenden Lackierungen und Klarlackierungen sind einfach herzustellen und weisen hervorragende optische Eigenschaften und eine sehr hohe Licht-, Chemikalien-, Wasser-, Schwitzwasser- und Witterungsbeständigkeit auf. Insbesondere sind sie frei von Trübungen und Inhomogenitäten. Sie weisen einen sehr gutes Reflow-Verhalten und eine hervorragende Zwischenschichthaftung zwischen Basislackierung und Klarlackierung und eine gute bis sehr gute Haftung zu üblichen und bekannten Autoreparaturlackierungen auf.

Die erfindungsgemäßen Klebschichten verbinden die unterschiedlichsten Substrate auf Dauer haftfest miteinander und haben eine hohe chemische und mechanische Stabilität auch bei extremen Temperaturen und/oder Temperaturenschwankungen.

Desgleichen dichten die erfindungsgemäßen Dichtungen die Substrate auf Dauer ab, wobei sie eine hohe chemische und mechanische Stabilität auch bei extremen Temperaturen und/oder Temperaturschwankungen sogar i. V. m. der Einwirkung aggressiver Chemikalien aufweisen.

Vor allem aber weisen die efindungsgemäßen Beschichtungen eine hohe Härte und Kratzfestigkeit auf, weswegen sie mit besonderem Vorteil auf dem Gebiet der Kraftfahrzeuglackierungen verwendet werden können.

Ein weiterer Vorteil der neuen Dual-Cure-Beschichtungsstoffe, -Klebstoffe und -Dichtungsmassen ist, daß sie auch in den Schattenzonen komplex geformter dreidimensionaler Substrate, wie Karosserien, Radiatoren oder elektrische Wickelgüter, auch ohne optimale, insbesondere vollständige, Ausleuchtung der Schattenzonen mit aktinischer Strahlung Beschichtungen, Klebschichten und Dichtungen liefern, deren anwendungstechnisches Eigenschaftsprofil an das der Beschichtungen, Klebschichten und Dichtungen außerhalb der Schattenzonen zumindest heranreicht. Dadurch werden die in den Schattenzonen befindlichen Beschichtungen, Klebschichten und Dichtungen auch nicht mehr leicht durch mechanische und/oder chemische Einwirkung geschädigt, wie sie beispielsweise beim Einbau weiterer Bestandteile von Kraftfahrzeugen in die beschichteten Karosserien eintreten kann.

Demzufolge weisen die auf den vorstehend aufgeführten technologischen Gebieten üblicherweise angewandten grundierten oder ungrundierten Substrate, die mit mindestens einer erfindungsgemäßen Beschichtung beschichtet, mit mindestens einer erfindungsgemäßen Klebschicht verklebt und/oder mit mindestens einer erfindungsgemäßen Dichtung abgedichtet sind, bei einem besonders vorteilhaften anwendungstechnischen Eigenschaftsprofil eine besonders lange Gebrauchsdauer auf, was sie wirtschaftlich besonders attraktiv macht.

### Beispiele

### Herstellbeispiel 1

### Die Herstellung eines Hydroxylgruppen enthaltenden Methacrylatcopolymerisats

In einem 4 Liter-Reaktor, ausgestattet mit einem Rührer, zwei Tropftrichtern als Zuläufe für die Monomermischung und die Initiatorlösung, Stickstoffeinleitungsrohr, Thermometer und Rückflußkühler wurde 731 Gewichtsteile einer Fraktion aromatischer Kohlenwasserstoffe mit mit einem Siedebereich von 158 bis 172 °C eingewogen und auf 140 °C aufgeheizt. Hiernach wurden eine Monomermischung aus 183 Gewichtsteilen n- Butylmethacrylat, 458 Gewichtsteilen Ethylhexylmethacrylat, 214 Gewichtsteilen Styrol, 183 Gewichtsteilen Hydroxyethylacrylat, 458 Gewichtsteilen 4-Hydroxybutylacrylat und 31 Gewichtsteilen Acrylsäure innerhalb von vier Stunden und eine Initiatorlösung von 153 Gewichtsteilen tert.-Butylperethylhexanoat in 92 Gewichtsteilen des vorstehend beschriebenen aromatischen Lösemittels innerhalb von 4,5 Stunden gleichmäßig in den Reaktor dosiert. Mit der Dosierung der Monomermischung und der Initiatorlösung wurde gleichzeitig begonnen. Nach Beendigung der Zudosierung des Initiators wurde die Reaktionsmischung weitere zwei Stunden unter Rühren auf 140 °C erhitzt und danach abgekühlt. Die resultierende Harzlösung wies einen Feststoffgehalt von 65% auf (Umluftofen; eine Stunde; 130°C).

### Herstellbeispiel 2

### Die Herstellung eines Chlorformiatgruppen enthaltenden Methacrylatcopolymerisats

700 Gewichtsteile der Harzlösung gemäß Herstellbeispiel 1 wurden mit 700 Gewichtsteilen Xylol verdünnt, um sie besser rührfähig zu machen. Die resultierende Mischung wurde in einem geeigneten Reaktor vorgelegt. Anschließend wurden unter Rühren bei Raumtemperatur während einer Stunde 400 Gewichtsteile Phosgen zur Harzlösung zudosiert. Nach 30minütiger Nachreaktionszeit wurde der Grad der Umsetzung IRspektroskopisch ermittelt. Hierbei waren keine Hydroxylgruppen mehr nachweisbar. Das überschüssige Phosgen wurde unter Vakuum abgetrennt. Anhand der Chlorwertbestimmung wurde ein Umsatz >90% festgestellt.

### Herstellbeispiel 3

### Die Herstellung des Carbamatgruppen enthaltenden Methacrylatcopolymerisats (A)

1450 Gewichtsteile der Chlorformiatgruppen enthaltenden Harzlösung gemäß Herstellbeispiel 2 wurden in einem geeigneten Reaktor vorgelegt. Anschließend wurden bei Raumtemperatur 61 Gewichtsteile Ammoniak in die Harzlösung eingeleitet, wobei Ammoniumchlorid ausfiel.

Die resultierende Harzlösung wurde nacheinander mit 500 Gewichtsteilen Wasser, 400 Gewichtsteilen Ethanol und 500 Gewichtsteilen Pentylacetat versetzt, um das ausgefallenen Ammoniumchlorid zu lösen und eine Phasentrennung hervorzurufen. Die resultierende Mischung wurde während einer Stunde bei Raumtemperatur gerührt und dann zur Phasentrennung stehen gelassen. Nach erfolgter Phasentrennung wurde die wäßrige Phase abgetrennt, und die organische Phase wurde mit Natriumchlorid getrocknet.

Die NMR-Analyse ergab, daß die Chlorformiatgruppen zu mehr als 80% zu Carbamatgruppen umgesetzt waren. Die resultierende Lösung des erfindungsgemäßen Polyacrylatharzes wies einen Festkörpergehalt von 68,6 Gew.-% (Umluftofen; eine Stunde; 130 °C), eine Viskosität von 8,4 dPas (Original) und eine Viskosität von 5,6 dPas in 65 %iger Anlösung in Solventnaphtha auf.

### Beispiel 1

### Die Herstellung eines erfindungsgemäßen Klarlacks

Der erfindungsgemäße Klarlack wurde durch Vermischen und Homogenisieren der folgenden Bestandteile hergestellt:
- 222 Gewichtsteile der Methacrylatcopolymerisatlösung (A) des Herstellbeispiels 3,
- 42,2 Gewichtsteile Setamine ® XL 1268 [harnstoffmodifiziertes Melaminharz (Resimene ® 755 der Firma Monsanto, 80prozentig in Isobutanol) der Firma Akzo Nobel; Gehalt an Rheologiehilfsmittel (B): 2,4 Gew.-%],
- 30 Gewichtsteile Pentaerythrittriacrylat (Sartomer ® 444D),
- 5,2 Gewichtsteile Tinuvin ® 400 (handelsüblicher UV- Absorber der Firma Ciba Specialty Chemicals, Inc.),
- 2,6 Gewichtsteile Tinuvin ® 123 (handelsüblicher reversibler Radikalfänger, sterisch gehindertes Amin (HALS) der Firma Ciba Specialty Chemicals, Inc.),
- 6,8 Gewichtsteile Nacure ® 5528 (handelsüblicher Katalysator (mit Aminen blockiertes Sulfonsäurederivat) der Firma King),
- 6,0 Gewichtsteile einer fünfprozentigen Lösung eines handelsüblichen Verlaufmittels auf der Basis Polydimethylsiloxan in Xylol,
- 0,8 Gewichtsteile Byk ® 306 (handelsübliches Additiv der Firma Byk Chemie),
- 4,0 Gewichtsteile Irgacure ® 184 (handelsüblicher Photoinitiator der Firma Ciba Specialty Chemicals, Inc.),
- 1,0 Gewichtsteile Lucirin ® TPO (handelsüblicher Photoinitiator der Firma BASF Aktiengesellschaft),
- 31 Gewichtsteile Ethylhexanol,
- 15 Gewichtsteile n-Butanol,
- 3 Gewichtsteile Pine Öl, 85prozentig, und
- 20 Gewichtsteile Butyldiglykol.

Der Dual-Cure-Klarlack wurde mit dem Gemisch der genannten Lösemittel auf eine Viskosität von 30 Sekunden im DIN 4-Auslaufbecher eingestellt. Dieser wies hiernach einen Festkörpergehalt von 55,3 Gew.-% (eine Stunde Umluftofen/130 °C) auf.

### Beispiel 2

### Die Herstellung einer erfindungsgemäßen farbgebenden Mehrschichtlackierung

Zur Herstellung der Mehrschichtlackierung wurden Prüftafeln aus Stahl, die mit einer Elektrotauchlackierung einer Trockenschichtdicke von 18 bis 22 µm beschichtet waren, mit einem Wasserfüller beschichtet. Die resultierende Wasserfüllerschicht wurde während 20 Minuten bei 160°C eingebrannt, so daß eine Füllerlackierung einer Trockenschichtdicke von 35 bis 40 µm resultierte. Die Füllerlackierung wurde anschließend mit einem schwarzen Wasserbasislack der Firma BASF Coatings AG in einer Schichtdicke von 12 bis 15 µm beschichtet. Die resultierenden Wasserbasislackschichten wurden während 10 Minuten bei 80°C abgelüftet. Hiernach wurde der Dual-Cure-Klarlack des Beispiels 1 in einer Schichtdicke von 40 bis 45 µm in einem Kreuzgang mit einer Fließbecherpistole pneumatisch appliziert. Anschließend wurden die Klarlackschichten während 5 Minuten bei Raumtemperatur und 5 Minuten bei 100 °C abgelüftet, mit UV- Strahlung bestrahlt (Dosis: 3.000 mJ/cm²) und anschließend gemeinsam mit den Wasserbasislackschichten bei 140 °C Objekttemperatur während 20 Minuten in einem Umluftofen eingebrannt.

Für die Prüfung der Benetzung wurden in der vorstehend beschriebenen Weise dünnere Klarlackschichten appliziert und eingebrannt. Die Prüfung ergab, daß eine sehr gute Benetzung bereits bei Schichtdicke unterhalb 20 µm vorhanden war.

Für die Prüfung des Verlaufs wurde der Klarlack elektrostatisch vertikal und horizontal auf die Prüftafeln appliziert. Verwendet wurde eine Eco-Bell-Glocke mit Direktaufladung. Der Verlauf wurde visuell als besonders gut beurteilt (sehr glatte Oberfläche). Die dem Fachmann geläufige Messung der Wave-Scan-Werte untermauert dies:
- Long-Wave/Short-Wave bei 40 µm, horizontale Applikation: 8,3/4
- Long-Wave/Short-Wave bei 40 µm, vertikale Applikation: 12,1/5,2
(Meßgerät: Firma Byk/Gardner - Wave scan plus).

Für die Prüfung der Läuferneigung wurden übliche und bekannte Lochbleche mit diagonaler Lochreihe anstelle der Prüftafeln verwendet. Der Klarlack wurde elektrostatisch in einer Schichtdicke von < 20 µm bis 65 µm appliziert. Verwendet wurde eine Eco-Bell-Glocke mit Direktaufladung. Basislackierung und Klarlackierung wurden in senkrechter Stellung eingebrannt. Erst bei Schichtdicken der Klarlackierungen > 50 µm gab es erste Anzeichen von Läufern; erst bei 52 µm erreichten die Läufer einer Länge von 1 cm.

Die resultierende Mehrschichtlackierung war sehr brillant und wies einen Glanz (20 °) nach DIN 67530 von 90 auf.

Die Kratzfestigkeit wurde mit Hilfe des Sandtests (vgl. die deutsche Patentanmeldung DE 138 39 453 A1, Seite 9, Zeilen 1 bis 63) anhand der vorstehend beschriebenen Prüfbleche beurteilt. Es wurden nach Beschädigung lediglich ein Glanzverlust um 11,5 Einheiten (20 °) auf 79,5 festgestellt, was die hohe Kratzfestigkeit untermauerte. Nach zwei Stunden bei 40 °C stieg der Glanz auf 80,2 und nach zwei Stunden bei 60 °C auf 81,6, was das sehr gute Reflow-Verhalten belegte.

Außerdem wurde die Kratzfestigkeit mit Hilfe des Bürstentests (vgl. die deutsche Patentanmeldung DE 198 39 453 A1, Seite 9, Zeilen 17 bis 63) anhand der vorstehend beschriebenen Prüfbleche beurteilt. Es wurden nach Beschädigung lediglich ein Glanzverlust um 4,8 Einheiten (20 °) auf 85,2 festgestellt, was die hohe Kratzfestigkeit untermauerte. Nach zwei Stunden bei 40 °C stieg der Glanz auf 85,9 und nach zwei Stunden bei 60 °C auf 86,5, was das sehr gute Reflow-Verhalten untermauerte.

Die Chemikalienbeständigkeit wurde nach BART bestimmt.

Der BART (BASF ACID RESISTANCE TEST) diente der Ermittlung der Beständigkeit von Lackoberflächen gegen Säuren, Laugen und Wassertropfen. Dabei wurde die Beschichtung auf einem Gradientenofen nach der Einbrennung weiteren Temperaturbelastungen ausgesetzt (30 min 40°C, 50°C, 60°C und 70°C). Zuvor wurden die Testsubstanzen (Schwefelsäure 1%-ig, 10%-ig, 36%-ig; schweflige Säure 5%-ig, Salzsäure 10%-ig, Natronlauge 5%-ig, VE (= vollentsalztes) Wasser (1,2,3 bzw. 4 Tropfen) definiert mit einer Dosierpipette aufgebracht. Im Anschluß an die Einwirkung der Substanzen wurden diese unter fließendem Wasser entfernt und die Beschädigungen nach 24 h entsprechend einer vorgegebenen Skala visuell beurteilt:

| **Benotung** | **Aussehen** |
|---|---|
| 0 | kein Defekt |
| 1 | leichte Markierung |
| 2 | Markierung/Vermattung/keine Erweichung |
| 3 | Markierung/Vermattung7Farbtonveränderung/Erweichung |
| 4 | Risse/beginnende Durchätzung |
| 5 | Klarlack entfernt |

Es wurde jede einzelne Markierung (Spot) ausgewertet und das Ergebnis für jede Beschichtung in geeigneter Form (z.B. Notensummen für eine Temperatur) festgehalten.

Die Ergebnisse des Tests finden sich in der Tabelle.

Der BART untermauert die außerordentliche Säurebeständigkeit der erfindungsgemäßen Mehrschichtlackierung bzw. des erfindungsgemäßen Klarlacks.

**Tabelle: Die Säurebeständigkeit der erfindungsgemäßen Mehrschichtlackierung nach BART**

| **Testsubstanz** | **40 °C 70 °C** | **50 °C** | **60 °C** | |
|---|---|---|---|---|
| Schwefelsäure 1%ig | 0 | 0 | 0 | 1 |
| Schwefelsäure 10%ig | 0 | 0 | 0 | 2 |
| Schwefelsäure 36%ig | 0 | 0 | 0,5 | 3 |
| Salzsäure 10%ig | 0 | 0 | 0 | 0 |
| Schweflige Säure 5%ig | 0 | 0 | 0 | 1 |
| Natronlauge 5 %ig | 0 | 0 | 0 | 0 |
| VE-Wasser 1 | 0 | 0 | 0 | 0 |
| VE-Wasser 2 | 0 | 0 | 0 | 0 |
| VE-Wasser 3 | 0 | 0 | 0 | 0 |
| VE-Wasser 4 | 0 | 0 | 0 | 0 |
| **Summe** | **0** | **0** | **0,5** | **7** |

## Patentansprüche

1. Carbamat- und/oder Allophanatgruppen enthaltende, thermisch und mit aktinischer Strahlung härtbare (Dual-Cure) Gemische, enthaltend
(A) mindestens einen Bestandteil, ausgewählt aus der Gruppe, bestehend aus
(A1) Allophanatgruppen, Carbamatgruppen oder Carbamat- und Allophanatgruppen enthaltenden Oligomeren und Polymeren, sowie
(A2) Allophanatgruppen, Carbamatgruppen oder Carbamat- und Allophanatgruppen und zusätzlich allophanat- und/oder carbamatreaktive funktionelle Gruppen enthaltenden Oligomeren und Polymeren,
die frei sind von reaktiven funktionellen Gruppen, die mindestens eine mit aktinischer Strahlung aktivierbare Bindung enthalten,
wobei die Oligomeren und Polymeren (A) aus der Gruppe, bestehend aus statistisch, alternierend und blockartig aufgebauten, linearen und verzweigten und kammartig aufgebauten (Co)Polymerlsaten von ethylenisch ungesättigten Monomeren, oder Polyadditionsharzen und Polykondensationsharzen, ausgewählt werden, und wobei die (Co)Polymerisate (A) aus der Gruppe, bestehend aus (Meth)Acrylatcopolymerisaten und Polyvinylestern, und die Polyadditionsharze und Polykondensationsharze aus der Gruppe, bestehend aus Polyestern, Alkyden, Polyurethanen, Polylactonen, Polycarbonaten, Polyethern, Epoxidharz-Amin-Addukten, Polyharnstoffen, Polyamiden und Polyimiden, ausgewählt werden,
und
(C) mindestens einen Bestandteil, der im statistischen Mittel mindestens eine reaktive funktionelle Gruppe mit mindestens einer mit aktinischer Strahlung aktivierbaren Bindung im Molekül enthält;
mit der Maßgabe, dass die Dual-Cure-Gemische noch
(B) mindestens einen Bestandteil, ausgewählt aus der Gruppe, bestehend aus allophanat- und/oder carbamatreaktive funktionelle Gruppen enthaltenden niedermolekularen Verbindungen, Oligomeren und Polymeren,
enthalten, wenn ausschließlich die Bestandteile (A1) verwendet werden.

2. Dual-Cure-Gemische nach Anspruch 1, **dadurch gekennzeichnet, dass** die allophanat- und/oder carbamatreaktiven funktionellen Gruppen aus der Gruppe, bestehend aus N-Methylolgruppen und N-Methylolethergruppen, ausgewählt werden.

3. Dual-Cure-Gemische nach Anspruch 1 oder 2, **dadurch gekennzeichnet, dass** die mit aktinischer Strahlung aktivierbaren Bindungen der mit aktinischer Strahlung härtbaren Bestandteile (C) aus der Gruppe bestehend aus Kohlenstoff-Wasserstoff-Einzelbindungen oder Kohlenstoff-Kohlenstoff-, Kohlenstoff-Sauerstoff-, Kohlenstoff-Stickstoff-, Kohlenstoff-Phosphor- oder Kohlenstoff-Silizium-Doppelbindungen, ausgewählt werden.

4. Dual-Cure-Gemische nach Anspruch 3, **dadurch gekennzeichnet, dass** die Doppelbindungen, als (Meth)Acrylat-, Ethacrylat-, Crotonat-, Cinnamat-, Vinylether-, Vinylester-, Ethenylarylen-, Dicyclopentadienyl-, Norbornenyl-, Isoprenyl-, Isopropenyl-, Allyl- oder Butenylgruppen, Ethenylarylen-, Dicyclopentadlenyl-, Norbornenyl-, Isoprenyl-, Isopropenyl-, Allyl- oder Butenylethergruppen oder Ethenylarylen-, Dicyclopentadienyl-, Norbornenyl-, Isoprenyl-, Isopropenyl-, Allyl- oder Butenylestergruppen vorliegen.

5. Dual-Cure-Gemische nach Anspruch 4, **dadurch gekennzeichnet, dass** die Doppelbindungen in (Meth)Acrylatgruppen vorliegen.

6. Dual-Cure-Gemische nach einem der Ansprüche 1 bis 5, **dadurch gekennzeichnet, dass** die Bestandteile (B) aus der Gruppe der Aminoplastharze ausgewählt werden.

7. Dual-Cure-Gemische nach einem der Ansprüche 1 bis 6, **dadurch gekennzeichnet, dass** die Bestandteile (C) aus der Gruppe, bestehend aus mit aktinischer Strahlung härtbaren Reaktivverdünnern und (meth)acrylfunktionellen (Meth)Acrylcopolymeren, Polyetheracrylaten, Polyesteracrylaten, ungesättigten Polyestern, Epoxyacrylaten, Urethanacrylaten, Aminoacrylaten, Melaminacrylaten, Silikonacrylaten und den entsprechenden Methacrylaten, ausgewählt werden.

8. Dual-Cure-Gemische nach Anspruch 7, **dadurch gekennzeichnet, dass** die Bestandteile (C) Pentaerhytrittriacrylat und Dipentaerythritpentaacrylat sind.

9. Dual-Cure-Gemische nach einem der Ansprüche 1 bis 8, **dadurch gekennzeichnet, dass** sie mindestens ein Rheologiehilfsmittel (D), ausgewählt aus der Gruppe, bestehend aus Kieselsäuren und Harnstoffderivaten, herstellbar, indem man mindestens ein Amin und/oder Wasser mit mindestens einem Isocyanat in der Gegenwart mindestens eines Oligomeren und/oder Polymeren (A) und/oder mindestens eines Aminoplastharzes (B) umsetzt, enthalten.

10. Dual-Cure-Gemische nach einem der Ansprüche 1 bis 9, **dadurch gekennzeichnet, dass** sie mindestens ein Netzmittel (E) enthalten.

11. Dual-Cure-Gemische nach Anspruch 10, **dadurch gekennzeichnet, dass** sie mindestens ein Netzmittel (E), ausgewählt aus der Gruppe, bestehend aus Siloxanen, fluorhaltigen Verbindungen, Carbonsäurehalbestern, Phosphorsäureestern, Polyacrylsäuren und deren Copolymeren sowie Polyurethanen, enthalten.

12. Dual-Cure-Gemlsche nach einem der Ansprüche 1 bis 11, **dadurch gekennzeichnet, dass** sie mindestens ein Pigment (F), ausgewählt aus der Gruppe, bestehend aus üblichen und bekannten organischen und anorganischen, farb-und/oder effektgebenden, elektrisch leitfähigen, magnetisch abschirmenden und fluoreszierenden Pigmenten und üblichen und bekannten organischen und anorganischen Füllstoffen und Nanopartikeln, die von den Rheologiehilfsmitteln (D) verschieden sind, enthalten.

13. Dual-Cure-Gemische nach einem der Ansprüche 1 bis 12, **dadurch gekennzeichnet, dass** sie mindestens einen Photoinitiator (G) enthalten.

14. Verfahren zur Herstellung der Carbamat- und/oder Allophanatgruppen enthaltenden, thermisch und mit aktinischer Strahlung härtbaren Dual-Cure-Gemische gemäß einem der Ansprüche 1 bis 13 durch Vermischen ihrer Bestandteile.

15. Verwendung der Carbamat- und/oder Allophanatgruppen enthaltenden, thermisch härtbaren Dual-Cure-Gemische gemäß einem der Ansprüche 1 bis 13 als Dual-Cure-Beschichtungsstoffe, -Klebstoffe oder -Dichtungsmassen.

16. Verwendung nach Anspruch 15, **dadurch gekennzeichnet, dass** die Dual-Cure-Beschichtungsstoffe als Dual-Cure-Klariacke verwendet werden.

17. Verwendung nach Anspruch 15 oder 16, **dadurch gekennzeichnet, dass** die Beschichtungsstoffe, Klebstoffe oder Dichtungsmassen dem Beschichten, Verkleben und Abdichten von Kraftfahrzeugkarosserien und Teilen hiervon, Kraftfahrzeugen im Innen- und Außenbereich, Bauwerken im Innen- und Außenbereich, Möbeln, Fenstern und Türen sowie im Rahmen der Industriellen Lackierung dem Beschichten, Verkleben und Abdichten von Kleintellen, Coils, Containern, Emballagen, elektrotechnischen Bauteilen und von weißer Ware dienen.

## Claims

1. A mixture curable thermally and with actinic radiation (dual-cure) and containing carbamate and/or allophanate groups, comprising
(A) at least one constituent selected from the group consisting of
(A1) oligomers and polymers containing allophanate groups, carbamate groups, or carbamate and allophanate groups, and
(A2) oligomers and polymers containing allophanate groups, carbamate groups, or carbamate and allophanate groups, and additionally allophanate- and/or carbamate-reactive functional groups,
which are free from reactive functional groups which contain at least one bond which can be activated with actinic radiation,
the oligomers and polymers (A) being selected from the group consisting of random, alternating and block, linear and branched and comb, addition (co)polymers of ethylenically unsaturated monomers, or polyaddition resins and polycondensation resins, and the addition (co)polymers (A) being selected from the group consisting of (meth)acrylate copolymers and polyvinyl esters, and the polyaddition resins and polycondensation resins from the group consisting of polyesters, alkyds, polyurethanes, polylactones, polycarbonates, polyethers, epoxy resin-amine adducts, polyureas, polyamides and polyimides,
and
(C) at least one constituent containing on average per molecule at least one reactive functional group having at least one bond which can be activated with actinic radiation;
with the proviso that the dual-cure mixture further comprises
(B) at least one constituent selected from the group consisting of low molecular mass compounds, oligomers and polymers containing allophanate- and/or carbamate-reactive functional groups,
if exclusively the constituents (A1) are used.

2. The dual-cure mixture as claimed in claim 1, wherein the allophanate- and/or carbamate-reactive functional groups are selected from the group consisting of N-methylol groups and N-methylol ether groups.

3. The dual-cure mixture as claimed in claim 1 or 2, wherein the bonds which can be activated with actinic radiation of the constituents (C) curable with actinic radiation are selected from the group consisting of carbon-hydrogen single bonds or carbon-carbon, carbon-oxygen, carbon-nitrogen, carbon-phosphorus or carbon-silicon double bonds.

4. The dual-cure mixture as claimed in claim 3, wherein the double bonds are present as (meth)acrylate, ethacrylate, crotonate, cinnamate, vinyl ether, vinyl ester, ethenylarylene, dicyclopentadienyl, norbornenyl, isoprenyl, isopropenyl, allyl or butenyl groups; ethenylarylene ether, dicyclopentadienyl ether, norbornenyl ether, isoprenyl ether, isopropenyl ether, allyl ether or butenyl ether groups; or ethenylarylene ester, dicyclopentadienyl ester, norbornenyl ester, isoprenyl ester, isopropenyl ester, allyl ester or butenyl ester groups.

5. The dual-cure mixture as claimed in claim 4, wherein the double bonds are present in (meth)acrylate groups.

6. The dual-cure mixture as claimed in any of claims 1 to 5, wherein the constituents (B) are selected from the group of the amino resins.

7. The dual-cure mixture as claimed in any of claims 1 to 6, wherein the constituents (C) are selected from the group consisting of reactive diluents curable with actinic radiation and (meth)acryloyl-functional (meth)acrylic copolymers, polyether acrylates, polyester acrylates, unsaturated polyesters, epoxy acrylates, urethane acrylates, amino acrylates, melamine acrylates, silicone acrylates and the corresponding methacrylates.

8. The dual-cure mixture as claimed in claim 7, wherein the constituents (C) are pentaerythritol triacrylate and dipentaerythritol pentaacrylate.

9. The dual-cure mixture as claimed in any of claims 1 to 8, comprising at least one rheological aid (D) selected from the group consisting of silicas and urea derivatives preparable by reacting at least one amine and/or water with at least one isocyanate in the presence of at least one oligomer and/or polymer (A) and/or of at least one amino resin (B).

10. The dual-cure mixture as claimed in any of claims 1 to 9, comprising at least one wetting agent (E).

11. The dual-cure mixture as claimed in claim 10, comprising at least one wetting agent (E) selected from the group consisting of siloxanes, fluorine compounds, carboxylic monoesters, phosphates, polyacrylic acids and their copolymers, and polyurethanes.

12. The dual-cure mixture as claimed in any of claims 1 to 11, comprising at least one pigment (F) selected from the group consisting of customary and known, organic and inorganic, color and/or effect, electrically conductive, magnetically shielding and fluorescent pigments and customary and known, organic and inorganic fillers and nanoparticles other than the rheological aids (D).

13. The dual-cure mixture as claimed in any of claims 1 to 12, comprising at least one photoinitiator (G).

14. A process for preparing a dual-cure mixture curable thermally and with actinic radiation and containing carbamate and/or allophanate groups, as claimed in any of claims 1 to 13, by mixing of its constituents.

15. The use of a dual-cure mixture curable thermally and containing carbamate and/or allophanate groups, as claimed in any of claims 1 to 13, as a dual-cure coating material, adhesive or sealing compound.

16. The use as claimed in claim 15, wherein the dual-cure coating materials are used as dual-cure clearcoat materials.

17. The use as claimed in claim 15 or 16, wherein the coating material, adhesive or sealing compound is used to coat, bond and seal motor vehicle bodies and parts thereof, the interior and exterior of motor vehicles, buildings inside and out, furniture, windows and doors, and, in the context of industrial coating, for the coating, bonding and sealing of small parts, coils, containers, packaging, electrical components, and white goods.

## Revendications

1. Mélanges durcissables thermiquement et par un rayonnement actinique (*Dual-Cure*), contenant des groupes carbamate et/ou allophanate, et qui contiennent
(A) au moins un composant choisi dans l'ensemble constitué par
(A1) des oligomères et polymères contenant des groupes allophanate, des groupes carbamate ou des groupes allophanate et carbamate, ainsi que
(A2) des oligomères et polymères contenant des groupes allophanate, des groupes carbamate ou des groupes allophanate et carbamate et en outre des groupes fonctionnels réactifs avec des allophanates et/ou des carbamates,
qui sont exempts de groupes fonctionnels réactifs qui comportent au moins une liaison activable par un rayonnement actinique,
les oligomères et polymères (A) étant choisis dans l'ensemble constitué par résines de polycondensation et des résines de polyaddition ou des produits de (co)polymérisation de monomères à insaturation oléfinique, à structure statistique, alternée ou séquencée, à structure linéaire, ramifiée ou en peigne, les produits de (co)polymérisation (A) étant choisis dans l'ensemble constitué par des produits de (co)polymérisation de (méth)acrylate et des poly(ester vinylique)s, et les résines de polyaddition et résines de polycondensation étant choisies dans l'ensemble constitué par les polyesters, les alkydes, les polyuréthannes, les polylactones, les polycarbonates, les polyéthers, les adduits amine-résine époxy, les polyurées, les polyamides et les polyimides,
et
(C) au moins un composant qui contient en moyenne statistique au moins un groupe réactif fonctionnel comportant au moins une liaison activable par un rayonnement actinique ;
étant entendu que les mélanges *Dual-Cure* contiennent encore
(B) au moins un composant choisi dans l'ensemble constitué par des composés de faible masse moléculaire, des oligomères et des polymères, contenant des groupes fonctionnels réactifs avec les allophanates et/ou les carbamates,
lorsqu'on utilise exclusivement les composants (A1).

2. Mélanges *Dual-Cure* selon la revendication 1, **caractérisés en ce que** les groupes fonctionnels réactifs avec les allophanates et/ou les carbamates sont choisis dans l'ensemble constitué par les groupes N-méthylol et les groupes N-méthyloléther.

3. Mélanges *Dual-Cure* selon la revendication 1 ou 2, **caractérisés en ce que** les liaisons activables par un rayonnement actinique des composants (C) durcissables par un rayonnement actinique sont choisies dans le groupe constitué par les liaison simples carbone-hydrogène et les doubles liaisons carbone-carbone, carbone-oxygène, carbone-azote, carbone-phosphore et carbone-silicium.

4. Mélanges *Dual*-*Cure* selon la revendication 3, **caractérisés en ce que** les doubles liaisons sont présentes sous forme de groupes (méth)acrylate, éthacrylate, crotonate, cinnamate, éther vinylique, ester vinylique, éthénylarylène, dicyclopentadiényle, norbornényle, isoprényle, isopropényle, allyle ou butényle ; de groupes éther éthénylarylénique, dicyclo-pentadiénylique, norbornénylique, isoprénylique, isopropénylique, allylique ou buténylique, ou de groupes ester éthénylarylénique, dicyclo-pentadiénylique, norbornénylique, isoprénylique, isopropénylique, allylique ou buténylique.

5. Mélanges *Dual*-*Cure* selon la revendication 4, **caractérisés en ce que** les doubles liaisons sont présentes dans des groupes (méth)acrylate.

6. Mélanges *Dual*-*Cure* selon l'une quelconque des revendications 1 à 5, **caractérisés en ce que** les composants (B) sont choisis dans le groupe des aminoplastes.

7. Mélanges *Dual*-*Cure* selon l'une quelconque des revendications 1 à 6, **caractérisés en ce que** les composants (C) sont choisis dans l'ensemble constitué par des diluants réactifs durcissables par un rayonnement actinique et des (co)polymères (méth)acryliques à fonction (méth)acryloyle, des polyétheracrylates, des polyesteracrylates, des polyesters insaturés, des époxyacrylates, des uréthanne-acrylates, des aminoacrylates, des mélamine-acrylates, des silicone-acrylates et les méthacrylates correspondants.

8. Mélanges *Dual*-*Cure* selon la revendication 7, **caractérisés en ce que** les composants (C) sont le triacrylate de pentaérythritol et le penta-acrylate de dipentaérythritol.

9. Mélanges *Dual*-*Cure* selon l'une quelconque des revendications 1 à 8, **caractérisés en ce qu'**ils contiennent au moins un adjuvant de rhéologie (D), choisi dans le groupe constitué par les acides siliciques et les dérivés d'urée, pouvant être préparés par mise en réaction d'au moins une amine et/ou d'eau avec au moins un isocyanate en présence d'au moins un oligomère et/ou polymère (A) et/ou d'au moins un aminoplaste (B).

10. Mélanges *Dual*-*Cure* selon l'une quelconque des revendications 1 à 9, **caractérisés en ce qu'**ils contiennent au moins un agent mouillant (E).

11. Mélanges *Dual*-*Cure* selon la revendication 10, **caractérisés en ce qu'**ils contiennent au moins un agent mouillant (E) choisi dans le groupe constitué par des siloxanes, des composés fluorés, des hémiesters d'acides carboxyliques, des esters d'acide phosphorique, des poly(acide acrylique)s et des copolymères de ceux-ci, ainsi que des polyuréthannes.

12. Mélanges *Dual*-*Cure* selon l'une quelconque des revendications 1 à 11, **caractérisés en ce qu'**ils contiennent au moins un pigment (F), choisi dans le groupe constitué par des pigments organiques et des pigments inorganiques, colorants et/ou à effet, conducteurs de l'électricité, protégeant contre le magnétisme et fluorescents, connus et usuels, et des charges organiques et des charges inorganiques, connues et usuelles, et des nanoparticules, qui sont différentes des adjuvants de rhéologie (D).

13. Mélanges *Dual-Cure* selon l'une quelconque des revendications 1 à 12, **caractérisés en ce qu'**ils contiennent au moins un photoamorceur (G).

14. Procédé pour la préparation de mélanges *Dual-Cure* durcissables thermiquement et par un rayonnement actinique, contenant des groupes carbamate et/ou allophanate, selon l'une quelconque des revendications 1 à 13, par mélange de leurs composants.

15. Utilisation des mélanges *Dual*-*Cure* durcissables thermiquement et par un rayonnement actinique, contenant des groupes carbamate et/ou allophanate, selon l'une quelconque des revendications 1 à 13, en tant que matières de revêtement, adhésifs et matériaux d'étanchéité *Dual*-*Cure*.

16. Utilisation selon la revendication 15, **caractérisée en ce que** les matières de revêtement *Dual-Cure* sont utilisées sous forme de vernis *Dual*-*Cure*.

17. Utilisation selon la revendication 15 ou 16, **caractérisée en ce que** les matières de revêtement, adhésifs et matériaux d'étanchéité servent au revêtement, au collage et à l'étanchéification de carrosseries de véhicules automobiles et de pièces de celles-ci, de véhicules automobiles à l'intérieur et à l'extérieur, de bâtiments à l'intérieur et à l'extérieur, de meubles, de fenêtres et de portes ainsi que, dans le cadre du peinturage industriel, au revêtement, au collage et à l'étanchéification de petites pièces, de rubans continus, de récipients, d'emballages, de composants électrotechniques et d'appareils électroménagers.
